(19) Europäisches Patentamt
European Patent Office
Office européen des brevets

(11) EP 0 995 787 A2

(12) EUROPÄISCHE PATENTANMELDUNG

(43) Veröffentlichungstag:
**26.04.2000 Patentblatt 2000/17**

(51) Int. Cl.[7]: **C09K 19/30**, C09K 19/42, C09K 19/46

(21) Anmeldenummer: **99124394.0**

(22) Anmeldetag: **22.01.1996**

(84) Benannte Vertragsstaaten:
**DE GB NL**

(30) Priorität: **03.02.1995 DE 19503507**

(62) Dokumentnummer(n) der früheren Anmeldung(en) nach Art. 76 EPÜ:
**96901748.2 / 0 807 153**

(71) Anmelder: **MERCK PATENT GmbH**
**64293 Darmstadt (DE)**

(72) Erfinder:
- **Pausch, Axel**
  **64342 Seeheim (DE)**
- **Poetsch, Eike**
  **64367 Mühltal (DE)**
- **Tarumi, Kazuaki**
  **64342 Seeheim (DE)**
- **Huth, Anja**
  **64560 Riedstadt (DE)**
- **Wächtler, Andreas**
  **72076 Tübingen (DE)**
- **Beyer, Andreas**
  **63452 Hanau (DE)**
- **Schuler, Brigitte**
  **63762 Grossostheim (DE)**
- **Reiffenrath, Volker**
  **64380 Rossdorf (DE)**
- **Bremer, Matthias**
  **64295 Darmstadt (DE)**
- **Kompter, Michael**
  **64560 Riedstadt (DE)**

Bemerkungen:
Diese Anmeldung ist am 07 - 12 - 1999 als Teilanmeldung zu der unter INID-Kode 62 erwähnten Anmeldung eingereicht worden.

(54) **Elektrooptische Flüssigkristallanzeige**

(57) Die Erfindung betrifft eine elektrooptische Flüssigkristallanzeige mit einer Umorientierungsschicht zur Umorientierung der Flüssigkristalle, deren Feld eine signifikante Komponente parallel zur Flüssigkristallschicht aufweist, enthaltend ein flüssigkristallines Medium mit positiver dielektrischer Anisotropie, wobei das Medium mindestens eine mesogene Verbindung enthält, welche eine 3,4,5-Trifluorphenylgruppe aufweist, und/oder mindestens eine mesogene Verbindung enthält, welche ein Strukturelement der Formel 2,

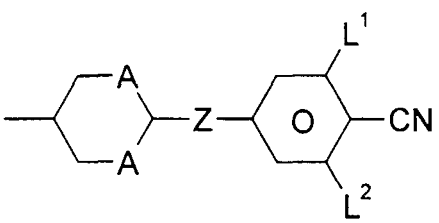

(2)

worin

A O oder CH,

Z -COO- oder eine Einfachbindung

$L^1$ F, oder falls A O ist auch H, und

EP 0 995 787 A2

$L^2$ H oder F

bedeuten.

## Beschreibung

Die Erfindung betrifft eine elektrooptische Flüssigkristallanzeige mit einer Umorientierungsschicht zur Umorientierung der Flüssigkristalle, deren Feld eine signifikante Komponente parallel zur Flüssigkristallschicht aufweist, enthaltend ein flüssigkristallines Medium mit positiver dielektrischer Anisotropie, wobei das Medium mindestens eine mesogene Verbindung enthält, welche eine 3,4,5-Trifluorphenylgruppe aufweist, und/oder mindestens eine mesogene Verbindung enthält, welche ein Strukturelement der Formel 2,

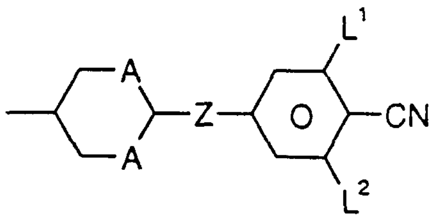

(2)

worin

A O oder CH,

Z -COO- oder eine Einfachbindung

$L^1$ F, oder falls A O ist auch H, und

$L^2$ H oder F

bedeuten.

In herkömmlichen Flüssigkristallanzeigen (TN, STN, OMI, AMD-TN) werden die elektrischen Felder zur Umorientierung im wesentlichen senkrecht zur Flüssigkristallschicht erzeugt.

In der internationalen Patentanmeldung WO 91/10936 wird eine Flüssigkristallanzeige offenbart, in der die elektrischen Signale so erzeugt werden, daß die elektrischen Felder eine signifikante Komponente parallel zur Flüssigkristallschicht aufweisen (IPS, In-Plane-Switching). Die Prinzipien, solch eine Anzeige zu betreiben, werden z.B. beschrieben von R.A. Soref in Journal of Applied Physics, Vol. 45, Nr. 12, S. 5466-5468 (1974).

In der EP 0 588 568 werden verschiedene Möglichkeiten zum Ansteuern solch einer Anzeige offenbart.

Diese IPS-Anzeigen können mit flüssigkristallinen Materialien entweder mit einer positiven oder mit einer negativen Dielektrizitätsanisotropie ($\Delta\varepsilon \neq 0$) betrieben werden. Mit den bisher bekannten Materialien werden in IPS-Anzeigen jedoch relativ hohe Schwellspannungen und lange Schaltzeiten erzielt. Es bestand daher die Aufgabe, flüssigkristalline Materialien aufzuzeigen die geeignet sind, bei IPS-Anzeigen relativ niedrige Schwellspannungen und kurze Schaltzeiten zu erzielen.

Diese Aufgabe wurde überraschenderweise gelöst durch Einsatz von flüssigkristallinen Materialien, welche mindestens eine Verbindung enthalten, die eine 3, 4, 5-Trifluorphenylgruppe aufweist, und/oder mindestens eine mesogene Verbindung enthält, welche ein Strukturelement der Formel 2,

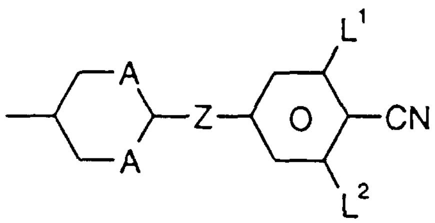

(2)

worin

A O oder CH,

Z -COO- oder eine Einfachbindung

$L^1$ F, oder falls A O ist auch H, und

$L^2$ H oder F

bedeuten.

Solche Verbindungen sind z.B. bekannt aus der EP 0 387 032 und der WO 91/03450.

Es gibt darin jedoch keinen Hinweis, daß man mit Hilfe dieser Substanzen die Schwellspannungen und die Schaltzeiten von IPS-Anzeigen verbessern kann.

Gegenstand der Erfindung ist somit eine elektrooptische Flüssigkristallanzeige mit einer Umorientierungsschicht zur Umorientierung der Flüssigkristalle, deren Feld eine signifikante Komponente parallel zur Flüssigkristallschicht aufweist, enthaltend ein flüssigkristallines Medium mit positiver dielektrischer Anisotropie, wobei das Medium mindestens eine mesogene Verbindung enthält, welche eine 3,4,5-Trifluorphenylgruppe aufweist, und/oder mindestens eine mesogene Verbindung enthält, welche ein Strukturelement der Formel 2,

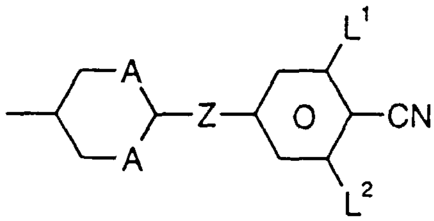

(2)

worin

A O oder CH,

Z -COO- oder eine Einfachbindung

$L^1$ F, oder falls A O ist auch H, und

$L^2$ H oder F

bedeuten.

Bevorzugte Ausführungsformen sind IPS-Anzeigen, wobei

a) das Medium mindestens eine Verbindung der Formel I enthält;

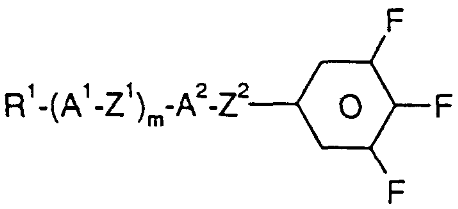

(I)

worin

$R^1$ H, einen unsubstituierten, einen einfach durch CN oder $CF_3$ oder einen mindestens einfach durch Halogen substituierten Alkyl- oder Alkenylrest mit 1 bis 15 C-Atomen, wobei in diesen Resten auch

eine oder mehrere $CH_2$-Gruppen jeweils unabhängig voneinander durch -O-, -S-,

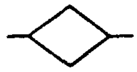

-CO-, -CO-O-, -O-CO- oder -O-CO-O- so ersetzt sein können, daß O-Atome nicht direkt miteinander verknüpft sind,

$A^1$ und $A^2$ jeweils unabhängig voneinander einen

(a) trans-1,4-Cyclohexylenrest oder 1,4-Cyclohexenylenrest, worin auch eine oder mehrere nicht benachbarte $CH_2$-Gruppen durch -O- und/oder -S-ersetzt sein können,

(b) 1,4-Phenylenrest, worin auch eine oder zwei CH-Gruppen durch N ersetzt sein können,

(c) Rest aus der Gruppe 1,4-Bicyclo(2,2,2)-octylen, Piperidin-1,4-diyl, Naphthalin-2,6-diyl, Decahydronaphthalin-2,6-diyl und 1,2,3,4-Tetrahydronaphthalin-2,6-diyl,

wobei die Reste (a) und (b) durch ein oder zwei Fluor substituiert sein können,

$Z^1$ und $Z^2$ jeweils unabhängig voneinander -CO-O-, -O-CO-, $-CH_2O-$, $-OCH_2-$, $-CH_2CH_2-$, -CH=CH-, -C≡C- oder eine Einfachbindung, einer der Reste $Z^1$ und $Z^2$ auch $-(CH_2)_4-$ oder $-CH=CH-CH_2CH_2-$, und

m 0, 1 oder 2

bedeutet;

b) das Medium mindestens eine Verbindung enthält, welche eine Gruppe der Formel 3 aufweist:

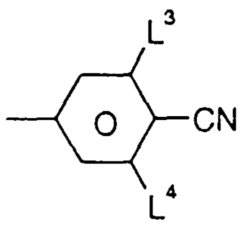

(3)

worin

$L^3$ und $L^4$ jeweils H oder F

bedeuten, insbesondere wobei das Medium mindestens eine Verbindung der Formel II enthält

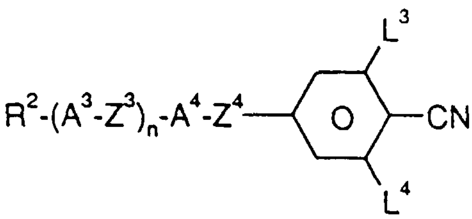

II

worin

$L^3$ und $L^4$ die angegebene Bedeutung aufweisen, insbesondere worin $L^3$ F und $L^4$ H oder F bedeutet,

$R^2$ die für $R^1$ angegebene Bedeutung aufweist,

$A^3$ und $A^4$ jeweils unabhängig die für $A^1$ und $A^2$ angegebene Bedeutung besitzen,

$Z^3$ und $Z^4$ jeweils unabhängig voneinander die für $Z^1$ und $Z^2$ angegebene Bedeutung aufweisen, und

n 0, 1 oder 2, vorzugsweise 0 ist;

c) das Medium eine dielektrische Anisotropie $\Delta\varepsilon > 8{,}5$ aufweist, vorzugsweise zwischen 8,6 und 14, insbesondere zwischen 8,7 und 13,5;

d) das Medium mindestens eine Verbindung, ausgewählt aus den Formeln IIa bis IIc, enthält

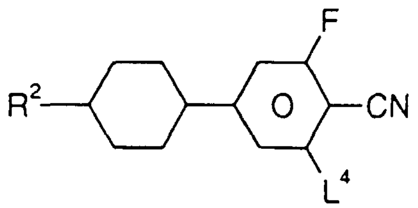

IIa

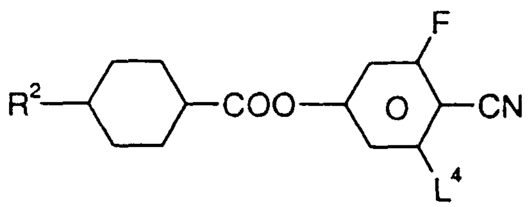

IIb

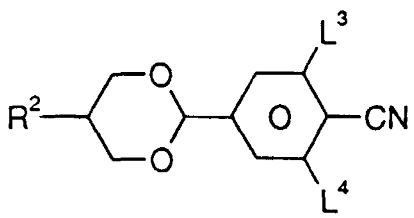

IIc

worin jeweils $R^2$, $L^3$ und $L^4$ die angegebene Bedeutung besitzen;

e) das Medium mindestens eine Verbindung der Formel III enthält,

$$R^3\text{-}(A^5\text{-}Z^5)_o\text{-}A^6\text{-}R^4 \qquad \text{III}$$

worin

$R^3$ und $R^4$ jeweils unabhängig voneinander die für $R^1$ angegebene Bedeutung besitzen,

$A^5$ und $A^6$ jeweils unabhängig die für $A^1$ und $A^2$ angegebene Bedeutung besitzen,

$Z^5$ jeweils unabhängig voneinander die für $Z^1$ und $Z^2$ angegebene Bedeutung aufweist, und

o 1, 2 oder 3 ist;

f) das Medium mindestens eine Verbindung der Formel IV enthält

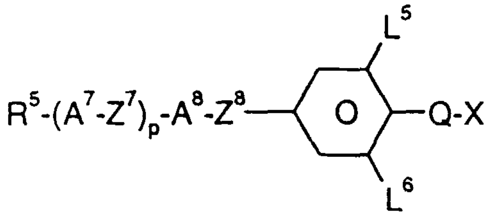

IV

worin

$R^5$ die für $R^1$ angegebene Bedeutung aufweist,

$A^7$ und $A^8$ jeweils unabhängig voneinander die für $A^1$ und $A^2$ angegebene Bedeutung besitzen,

$Z^7$ und $Z^8$ jeweils unabhängig voneinander die für $Z^1$ und $Z^2$ angegebene Bedeutung besitzen,

$L^5$ und $L^6$ jeweils unabhängig voneinander H oder F,

Q einen Polyfluoralkylenrest der Formel

$$-(O)_q-(CH_2)_r-(CF_2)_s-$$

worin

q 0 oder 1 ist

r 0, oder eine ganze Zahl zwischen 1 und 6 ist und

s eine ganze Zahl zwischen 1 und 6 ist,

X H, F oder Cl, und

p 0, 1 oder 2 bedeuten.

Weiterhin bevorzugt ist eine IPS-Anzeige, wobei die Bildelemente mittels Aktivmatrix angesteuert werden.

Ein weiterer Gegenstand der Erfindung ist ein flüssigkristallines Medium mit positiver dielektrischer Anisotropie, welches mindestens eine Verbindung mit einer 3,4,5-Trifluorphenylgruppe, vorzugsweise einer Verbindung der Formel I, und mindestens eine Verbindung mit einer Gruppe der Formel (3) enthält, vorzugsweise einer Gruppe der Formel (2), insbesondere eine Verbindungder Formel II, insbesondere welches

- 10 bis 60, vorzugsweise 15 bis 40 Gew.% mindestens einer Verbindung der Formel I,
- 15 bis 40, vorzugsweise 20 bis 35 Gew.% mindestens einer Verbindung der Formel II,
- 20 bis 55, vorzugsweise 25 bis 50 Gew.% mindestens einer Verbindung der Formel III, und
- 0 bis 30, vorzugsweise 20 bis 25 Gew.% einer Verbindung der Formel IV,

enthält.

Vorzugsweise enthält das erfindungsgemäße flüssigkristalline Medium:

- mindestens eine Verbindung ausgewählt aus den Formeln Ia und Ib enthält

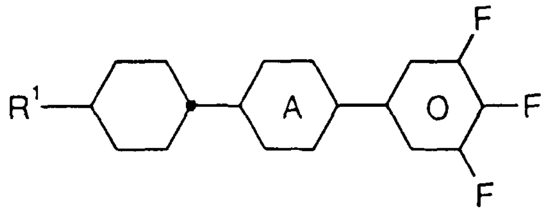

Ia

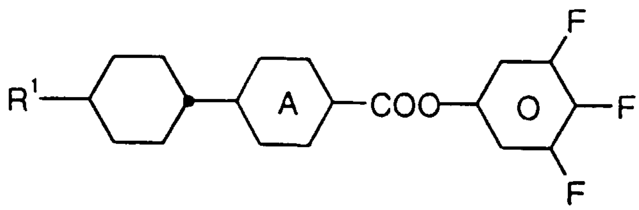

Ib

- mindestens eine Verbindung, ausgewählt aus den Formeln II1, II2, II3 und II4 enthält,

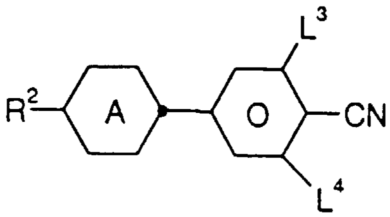

II1

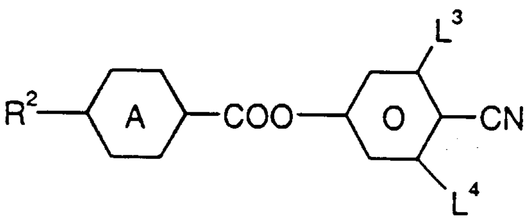

II2

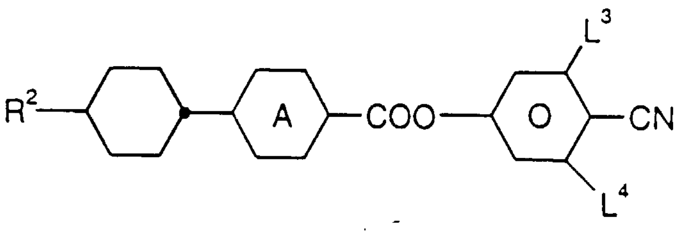

II3

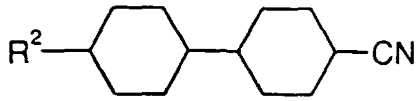

II4

- mindestens eine Verbindung ausgewählt aus den Formeln IIIa, IIIb und IIIc,

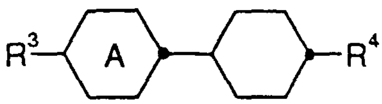

IIIa

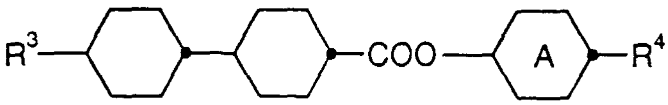

IIIb

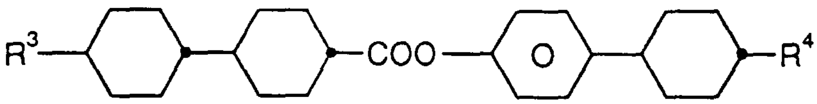

IIIc

sowie

- gegebenenfalls mindestens eine Verbindung ausgewählt aus den Formeln IVa und IVb,

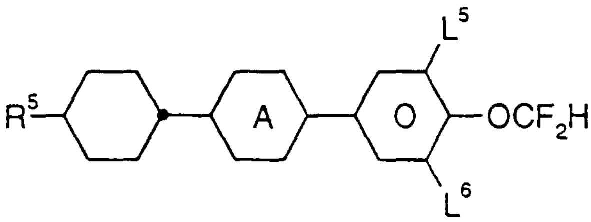

IVa

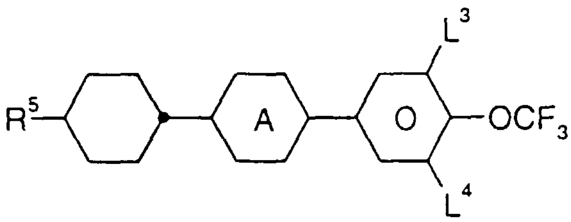

IVb

worin

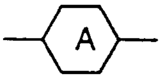 jeweils 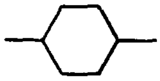, 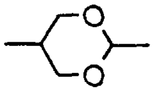, 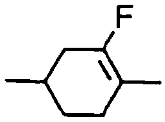,

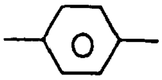 oder 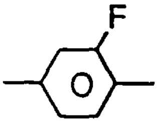

bedeutet, und $R^1$, $R^2$, $R^3$, $R^4$, $R^5$, $L^1$, $L^2$, $L^3$ und $L^4$ die jeweils angegebene Bedeutung besitzen.

In einer besonders bevorzugten Ausführungsform enthalten die erfindungsgemäßen Medien mindestens eine Verbindung der Formel Ia, worin

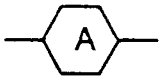 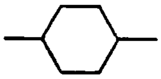

bedeutet, und mindestens eine Verbindung der Formel Ia, worin

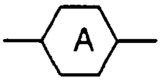 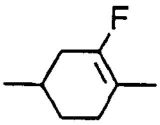, 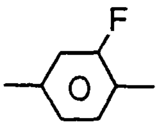 oder 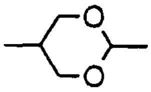,

bedeutet.

In einer weiteren bevorzugten Ausführungsform enthalten die erfindungsgemäßen Medien mindestens eine Verbindung der Formel Ia und mindestens eine Verbindung der Formel Ib.

Weiterhin bevorzugt sind Medien enthaltend mindestens eine Verbindung der Formel IIa, worin

$L^3$ F und $L^4$ H oder F ist und

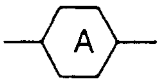 für 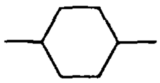,

steht; bzw. solche Verbindungen der Formel IIa, worin

$L^3$ und $L^4$ für H oder F stehen und

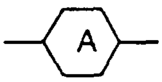 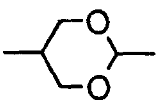 bedeutet.

Besonders bevorzugt enthalten die erfindungsgemäßen Medien eine Verbindung der Formel IIb, worin

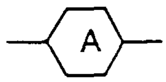 für 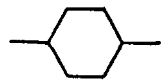 ,

steht und $L^3$ F bedeutet.

Die erfindungsgemäßen flüssigkristallinen Medien weisen in der Regel eine Doppelbrechung ($\Delta n$) < 0,12 auf, vorzugsweise ist $\Delta n$ zwischen 0,07 und 0,1, insbesondere zwischen 0,08 und 0,09.

Die Viskosität (bei 20 °C) der erfindungsgemäβen Materialien ist in der Regel kleiner als 30 $mm^2\ s^{-1}$, insbesondere zwischen 15 und 25 $mm^2\ s^{-1}$.

Der spezifische Widerstand der erfindungsgemäßen Materialien ist in der Regel bei 20 °C zwischen $5 \times 10^{10}$ und $5 \times 10^{13}\ \Omega \cdot$ cm, besonders bevorzugt liegen die Werte zwischen $5 \times 10^{11}$ und $5 \times 10^{12}\ \Omega \cdot$ cm.

Es wurde gefunden, daß bereits ein relativ geringer Anteil an Verbindungen der Formel I im Gemisch mit üblichen Flüssigkristallmaterialien, insbesondere jedoch mit einer oder mehreren Verbindungen der Formel II, III und/oder IV zu einer beträchtlichen Erniedrigung der Schwellspannung und zu schnellen Schaltzeiten führt, wobei gleichzeitig breite nematische Phasen mit tiefen Übergangstemperaturen smektisch-nematisch beobachtet werden. Die Verbindungen der Formeln I bis IV sind farblos, stabil und untereinander und mit anderen Flüssigkristallmaterialien gut mischbar.

Der Ausdruck "Alkyl" umfaßt geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppe mit 2-5 Kohlenstoffatomen sind im allgemeinen bevorzugt.

Der Ausdruck "Alkenyl" umfaßt geradkettige und verzweigte Alkenylgruppen mit 2-7 Kohlenstoffatomen, insbesondere die geradkettigen Gruppen. Besonders Alkenylgruppen sind $C_2$-$C_7$-1E-Alkenyl, $C_4$-$C_7$-3E-Alkenyl, $C_5$-$C_7$-4-Alkenyl, $C_6$-$C_7$-5-Alkenyl und $C_7$-6-Alkenyl, insbesondere $C_2$-$C_7$-1E-Alkenyl, $C_4$-$C_7$-3E-Alkenyl und $C_5$-$C_7$-4-Alkenyl. Beispiele bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfaßt vorzugsweise geradkettige Gruppen mit endständigen Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfaßt vorzugsweise geradkettige Reste der Formel $C_nH_{2n+1}$-O-$(CH_2)_m$, worin n und m jeweils unabhängig voneinander 1 bis 6 bedeuten. Vorzugsweise ist n = 1 und m 1 bis 6.

Durch geeignete Wahl der Bedeutungen von $R^1$ und $R^5$ können die Ansprechzeiten, die Schwellenspannung, die Steilheit der Transmissionskennlinien etc. in gewünschter Weise modifiziert werden. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten $k_{33}$ (bend) und $k_{11}$ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von $k_{33}/k_{11}$ im Vergleich zu Alkyl- und Alkoxyresten.

Eine Gruppe $-CH_2CH_2-$ in $Z^1$ bzw. $Z^2$ führt im allgemeinen zu höheren Werte von $k_{33}/k_{11}$ im Vergleich zu einer einfachen Kovalenzbindung. Höhere Werte von $k_{33}/k_{11}$ ermöglichen z.B. flachere Transmissionskennlinien in TN-Zellen mit 90° Verdrillung (zur Erzielung von Grautönen) und steuere Transmissionskennlinien in STN-, SBE- und OMI-Zellen (höhere Multiplexierbarkeit) und umgekehrt.

Das optimale Mengenverhältnis der Verbindungen der Formeln I und II + III + IV hängt weitgehend von den gewünschten Eigenschaften, von der Wahl der Komponenten der Formeln I, II, III und/oder IV und Von der Wahl weiterer gegebenenfalls vorhandener Komponenten ab. Geeignete Mengenverhältnisse innerhalb des oben angegebenen Bereichs können von Fall zu Fall leicht ermittelt werden.

Die Gesamtmenge an Verbindungen der Formeln I bis IV in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln I und II ist.

In einer besonders bevorzugten Ausführungsform enthalten die erfindungsgemäßen Medien Verbindungen der Formel IV (vorzugsweise II und/oder III), worin Q-X $OCF_3$ oder $OCHF_2$ bedeutet. Eine günstige synergistische Wirkung mit den Verbindungen der Formel I führt zu besonders vorteilhaften Eigenschaften.

Die erfindungsgemäßen flüssigkristallinen Medien enthalten vorzugsweise neben einer oder mehreren Verbindungen der Formeln I, II, II und IV als weitere Bestandteile 2 bis 40, insbesondere 4 bis 30 Komponenten. Ganz

besonders bevorzugt enthalten diese Medien neben einer oder mehreren erfindungsgemäßen Verbindungen 7 bis 25 Komponenten. Diese weiteren Bestandteile werden vorzugsweise ausgewählt aus nematischen oder nematogenen (monotropen oder isotropen) Substanzen, insbesondere Substanzen aus den Klassen der Azoxybenzole, Benzylidenaniline, Biphenyle, Terphenyle, Phenyl- oder Cyclohexylbenzoate, Cyclohexancarbonsäurephenyl- oder cyclohexylester, Phenyl- oder Cyclohexyl-ester der Cyclohexylbenzoesäure, Phenyl- oder Cyclohexyl-ester der Cyclohexylcyclohexancarbonsäure, Cyclohexyl-phenylester der Benzoesäure, der Cyclohexancarbonsäure, bzw. der Cyclohexylcyclohexancarbonsäure, Phenylcyclohexane, Cyclohexylbiphenyle, Phenylcyclohexylcyclohexane, Cyclohexylcyclohexane, Cyclohexylcyclohexylcyclohexene, 1,4-Bis-cyclohexylbenzole, 4,4'-Bis-cyclo-hexylbiphenyle, Phenyl- oder Cyclohexylpyrimidine, Phenyl-oder Cyclohexylpyridine, Phenyl- oder Cyclohexyldioxane, Phenyl- oder Cyclohexyl-1,3-dithiane, 1,2-Diphenylethane, 1,2-Dicyclohexylethane, 1-Phenyl-2-cyclohexylethane, 1-Cyclohexyl-2-(4-phenyl-cyclohexyl)-ethane, 1-Cyclohexyl-2-biphenylylethane, 1-Phenyl-2-cyclohexyl-phenylethane, gegebenenfalls halogenierten Stilbene, Benzylphenylether, Tolane und substituierten Zimtsäuren. Die 1,4-Phenylengruppen in diesen Verbindungen können auch fluoriert sein.

Die wichtigsten als weitere Bestandteile erfindungsgemäßer Medien in Frage kommenden Verbindungen lassen sich durch die Formeln 1, 2, 3, 4 und 5 charakterisieren:

$$R'\text{-}L\text{-}E\text{-}R'' \qquad 1$$

$$R'\text{-}L\text{-}COO\text{-}E\text{-}R'' \qquad 2$$

$$R'\text{-}L\text{-}OOC\text{-}E\text{-}R'' \qquad 3$$

$$R'\text{-}L\text{-}CH_2CH_2\text{-}E\text{-}R'' \qquad 4$$

$$R'\text{-}L\text{-}C{\equiv}C\text{-}E\text{-}R'' \qquad 5$$

In den Formeln 1, 2, 3, 4 und 5 bedeuten L und E, die gleich oder verschieden sein können, jeweils unabhängig voneinander einen bivalenten Rest aus der aus -Phe-, -Cyc-, -Phe-Phe-, -Phe-Cyc-, -Cyc-Cyc-, -Pyr-, -Dio-, -G-Phe- und -G-Cyc- sowie deren Spiegelbilder gebildeten Gruppe, wobei Phe unsubstituiertes oder durch Fluor substituiertes 1,4-Phenylen, Cyc trans-1,4-Cyclohexylen oder 1,4-Cyclohexylen, Pyr Pyrimidin-2,5-diyl oder Pyridin-2,5-diyl, Dio 1,3-Dioxan-2,5-diyl und G 2-(trans-1,4-Cyclohexyl)-ethyl, Pyrimidin-2,5-diyl, Pyridin-2,5-diyl oder 1,3-Dioxan-2,5-diyl bedeuten.

Vorzugsweise ist einer der Reste L und E Cyc, Phe oder Pyr. E ist vorzugsweise Cyc, Phe oder Phe-Cyc. Vorzugsweise enthalten die erfindungsgemäßen Medien eine oder mehrere Komponenten ausgewählt aus den Verbindungen der Formeln 1, 2, 3, 4 und 5, worin L und E ausgewählt sind aus der Gruppe Cyc, Phe und Pyr und gleichzeitig eine oder mehrere Komponenten ausgewählt aus den Verbindungen der Formeln 1, 2, 3, 4 und 5, worin einer der Reste L und E ausgewählt ist aus der Gruppe Cyc, Phe und Pyr und der andere Rest ausgewählt ist aus der Gruppe -Phe-Phe-, -Phe-Cyc-, -Cyc-Cyc-, -G-Phe- und -G-Cyc-, und gegebenenfalls eine oder mehrere Komponenten ausgewählt aus den Verbindungen der Formeln 1, 2, 3, 4 und 5, worin die Reste L und E ausgewählt sind aus der Gruppe -Phe-Cyc-, -Cyc-Cyc-, -G-Phe- und -G-Cyc-.

R' und R'' bedeuten in einer kleineren Untergruppe der Verbindungen der Formeln 1, 2, 3, 4 und 5 jeweils unabhängig voneinander Alkyl, Alkenyl, Alkoxy, Alkoxyalkyl, Alkenyloxy oder Alkanoyloxy mit bis zu 8 Kohlenstoffatomen. Im folgenden wird diese kleinere Untergruppe Gruppe A genannt und die Verbindungen werden mit den Teilformeln 1a, 2a, 3a, 4a und 5a bezeichnet. Bei den meisten dieser Verbindungen sind R' und R'' voneinander verschieden, wobei einer dieser Reste meist Alkyl, Alkenyl, Alkoxy oder Alkoxyalkyl ist.

In einer anderen als Gruppe B bezeichneten kleineren Untergruppe der Verbindungen der Formeln 1, 2, 3, 4 und 5 bedeutet R''-F, -Cl, -NCS oder $-(O)_i\, CH_{3-(k+1)}\, F_kCl_1$, wobei i 0 oder 1 und k+1 1, 2 oder 3 sind; die Verbindungen, in denen R'' diese Bedeutung hat, werden mit den Teilformeln 1b, 2b, 3b, 4b und 5b bezeichnet. Besonders bevorzugt sind solche Verbindungen der Teilformeln 1b, 2b, 3b, 4b und 5b, in denen R'' die Bedeutung -F, -Cl, -NCS, $-CF_3$, $-OCHF_2$ oder $-OCF_3$ hat.

In den Verbindungen der Teilformeln 1b, 2b, 3b, 4b und 5b hat R' die bei den Verbindungen der Teilformeln 1a-5a angegebene Bedeutung und ist vorzugsweise Alkyl, Alkenyl, Alkoxy oder Alkoxyalkyl.

In einer weiteren kleineren Untergruppe der Verbindungen der Formeln 1, 2, 3, 4 und 5 bedeutet R''-CN; diese Untergruppe wird im folgenden als Gruppe C bezeichnet und die Verbindungen dieser Untergruppe werden entsprechend mit Teilformeln 1c, 2c, 3c, 4c und 5 c beschrieben. In den Verbindungen der Teilformeln 1c, 2c, 3c, 4c und 5c hat R' die bei den Verbindungen der Teilformeln 1a-5a angegebene Bedeutung und ist vorzugsweise Alkyl, Alkoxy oder Alkenyl.

Neben den bevorzugten Verbindungen der Gruppen A, B und C sind auch andere Verbindungen der Formeln 1, 2, 3, 4 und 5 mit anderen Varianten der vorgesehenen Substituenten gebräuchlich. All diese Substanzen sind nach literaturbekannten Methoden oder in Analogie dazu erhältlich.

Die erfindungsgemäßen Medien enthalten neben erfindungsgemäßen Verbindungen der Formel I vorzugsweise eine oder mehrere Verbindungen, welche ausgewählt werden aus der Gruppe A und/oder Gruppe B und/oder Gruppe C. Die Massenanteile der Verbindungen aus diesen Gruppen an den erfindungsgemäßen Medien sind vorzugsweise

| | |
|---|---|
| Gruppe A: | 0 bis 90 %, vorzugsweise 20 bis 90 %, insbesondere 30 bis 90 % |
| Gruppe B: | 0 bis 80 %, vorzugsweise 10 bis 80 %, insbesondere 10 bis 65 % |
| Gruppe C: | 0 bis 80 %, vorzugsweise 5 bis 80 %, insbesondere 5 bis 50 % |

wobei die Summe der Massenanteile der in den jeweiligen erfindungsgemäßen Medien enthaltenen Verbindungen aus den Gruppen A und/oder B und/oder C vorzugsweise 5 % bis 90 % und insbesondere 10 % bis 90 % beträgt.

Die erfindungsgemäßen Medien enthalten vorzugsweise 1 bis 40 %, insbesondere vorzugsweise 5 bis 30 % an erfindungsgemäßen Verbindungen. Weiterhin bevorzugt sind Medien, enthaltend mehr als 40 %, insbesondere 45 bis 90 % an erfindungsgemäßen Verbindungen. Die Medien enthalten vorzugsweise drei, vier oder fünf erfindungsgemäße Verbindungen.

Der Aufbau der erfindungsgemäßen IPS-Anzeige entspricht der für derartige Anzeigen üblichen Bauweise, wie z.B. beschrieben in der WO 91/10936 oder der EP 0 588 568. Dabei ist der Begriff der üblichen Bauweise hier weit gefaßt und umfaßt auch alle Abwandlungen und Modifikationen der IPS-Anzeige, insbesondere z.B. auch Matrix-Anzeigeelemente auf Basis poly-Si TFT oder MIM.

Ein wesentlicher Unterschied der erfindungsgemäßen Anzeigen zu den bisher üblichen besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden.

C bedeutet eine kristalline, S eine smektische, $S_B$ eine smektisch B, N eine nematische und I die isotrope Phase.

$V_{10}$ bezeichnet die Spannung für 10 % Transmission (Blickrichtung senkrecht zur Plattenoberfläche). $t_{on}$ bezeichnet die Einschaltzeit und $t_{off}$ die Ausschaltzeit bei einer Betriebsspannung entsprechend dem 2,5fachen Wert von $V_{10}$. $\Delta n$ bezeichnet die optische Anisotropie und $n_0$ den Brechungsindex (jeweils bei 589 nm). $\Delta\varepsilon$ bezeichnet die dielektrische Anisotropie ($\Delta\varepsilon = \varepsilon_{\parallel}-\varepsilon_{\perp}$ , wobei $\varepsilon_{\parallel}$ die Dielektrizitätskonstante parallel zu den Moleküllängsachsen und $\varepsilon_{\perp}$ die Dielektrizitätskonstante senkrecht dazu bedeutet. Die elektrooptischen Daten wurden in einer IPS-Zelle bei 20 °C gemessen, sofern nicht ausdrücklich etwas anderes angegeben wird. Die optischen Daten wurden bei 20 °C gemessen, sofern nicht ausdrücklich etwas anderes angegeben wird.

Es wurde eine IPS-Testzelle gemäß WO 91/10936 mit einer Kammstruktur eingesetzt, wobei die Elektroden und die Elektrodenzwischenräume eine Abstand von 20 µm aufweisen.

Die Schichtdicke d des Flüssigkristallmaterials beträgt 5 µm. Die Zelle weist ferner auf:

| | |
|---|---|
| Ausgangsverdrillungswinkel: | 0° |
| Ausrichtungswinkel: | 5° |
| Tilt-Anstellwinkel | 3° |

Die Zeilen sind im "Aus" Zustand dunkel.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste $C_nH_{2n+1}$ sind geradkettige Alkylreste mit n bzw. m C-Atomen. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten $R^1$, $R^2$, $L^1$ und $L^2$:

| Code für $R^1$, $R^2$, $L^1$, $L^2$ | $R^1$ | $R^2$ | $L^1$ | $L^2$ |
|---|---|---|---|---|
| nm | $C_nH_{2n+1}$ | $C_mH_{2m+1}$ | H | H |
| nOm | $C_nH_{2n+1}$ | $OC_mH_{2m+1}$ | H | H |
| nO.m | $OC_nH_{2n+1}$ | $C_mH_{2m+1}$ | H | H |
| n | $C_nH_{2n+1}$ | CN | H | H |
| nN.F | $C_nH_{2n+1}$ | CN | F | H |
| nF | $C_nH_{2n+1}$ | F | H | H |
| nOF | $OC_nH_{2n+1}$ | F | H | H |
| nCl | $C_nH_{2n+1}$ | Cl | H | H |
| nF.F | $C_nH_{2n+1}$ | F | F | H |
| nN.F.F | $C_nH_{2n+1}$ | CN | F | F |
| $nCF_3$ | $C_nH_{2n+1}$ | $CF_3$ | H | H |
| $nOCF_3$ | $C_nH_{2n+1}$ | $OCF_3$ | H | H |
| $nOCF_3$ | $C_nH_{2n+1}$ | $OCF_3$ | H | H |
| $nOCF_2$ | $C_nH_{2n+1}$ | $OCHF_2$ | H | H |
| nS | $C_nH_{2n+1}$ | NCS | H | H |
| rVsN | $C_rH_{2r+1}$-CH=CH-$C_sH_{2s}$- | CN | H | H |
| rEsN | $C_rH_{2r+1}$-O-$C_2H_{2s}$- | CN | H | H |
| nAm | $C_nH_{2n+1}$ | $COOC_mH_{2m+1}$ | H | H |
| nF.F.F | $C_nH_{2n+1}$ | F | F | F |
| nCl.F.F | $C_nH_{2n+1}$ | Cl | F | F |
| $nCF_3$.F.F | $C_nH_{2n+1}$ | $CF_3$ | F | F |
| $nOCF_3$.F.F | $C_nH_{2n+1}$ | $OCF_3$ | F | F |
| $nOCF_2$.F.F | $C_nH_{2n+1}$ | $OCHF_2$ | F | F |
| $nOCF_3$.F | $C_nH_{2n+1}$ | $OCF_3$ | F | H |

Tabelle A:

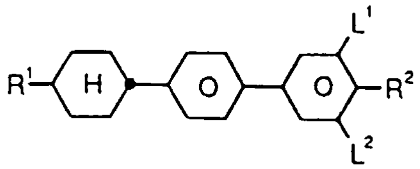

BCH

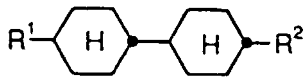

CCH

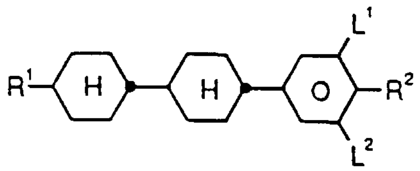

CCP

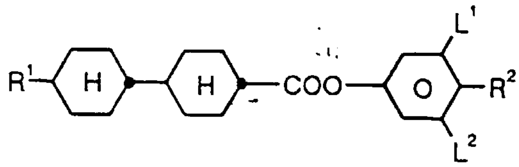

CP

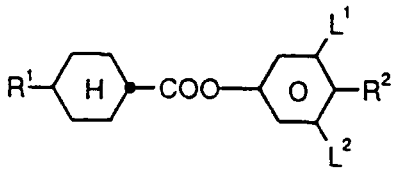

D

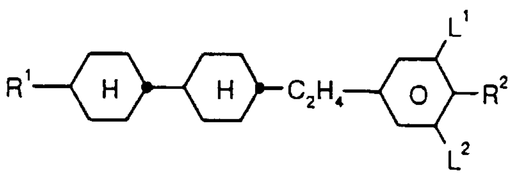

ECCP

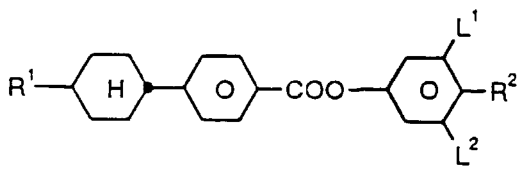

HP

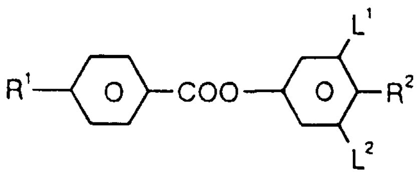

ME

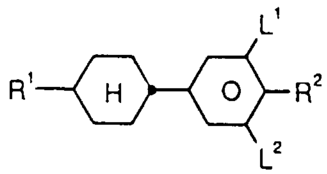

PCH

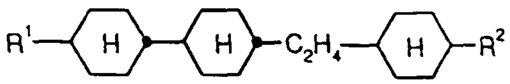

CH

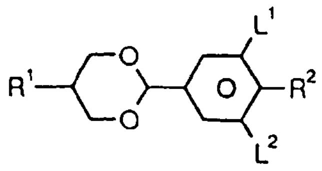

PDX

**Tabelle B:**

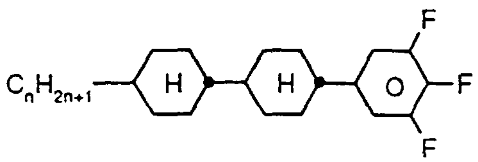

CCP-nF.F.F

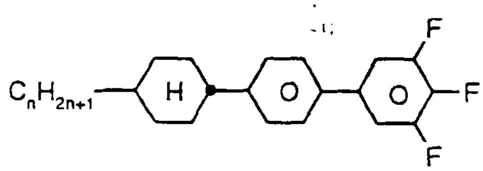

BCH-nF.F.F

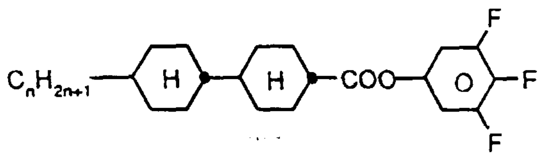

CCZU-n-F

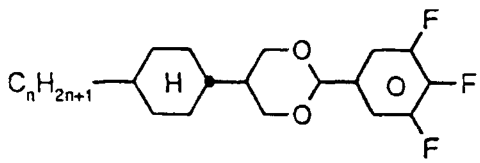

CDU-n-F

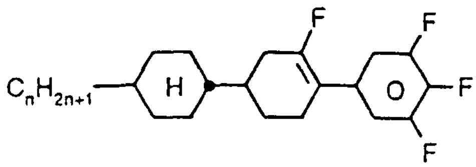

CFU-n-F

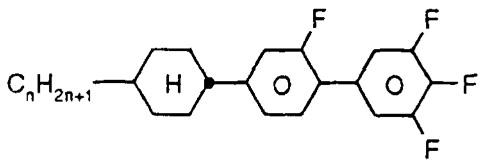

CGU-n-F

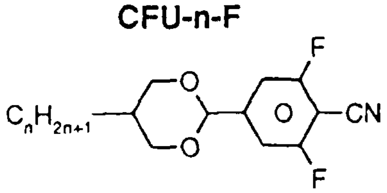

DU-n-N

Auch ohne weitere Ausführungen wird davon ausgegangen, daß ein Fachmann die obige Beschreibung im weitesten Umfang nutzen kann. Die bevorzugten Ausführungsformen sind deswegen lediglich als beschreibende, keineswegs als in irgendeiner Weise limitierende Offenbarung aufzufassen.

Die vollständige Offenbarung aller vor- und nachstehend aufgeführten Anmeldungen, Patente und Veröffentlichungen, sowie der korrespondierenden Anmeldungen

P 195 03 507 vom 03.02.1995,
P 195 09 791 vom 17.03.1995,
P 195 28 104 vom 01.08.1995,

P 195 28 106 vom 01.08.1995,
P 195 28 107 vom 01.08.1995 und
P 195 37 802 vom 11.10.1995

sind durch Bezugnahme in diese Anmeldung eingeführt.

Beispiel 1

Eine IPS-Anzeige enthält eine nematische Mischung mit

| | |
|---|---|
| Klärpunkt | +73 °C |
| $\Delta n$ | 0,0819 |
| $n_o$ | 1,4784 |
| $\Delta\varepsilon$ | 9,0 |
| $\varepsilon_\perp$ | 4,3 |
| Viskosität (20 °C) | 18 $mm^2\ s^{-1}$ |

bestehend aus

| | |
|---|---|
| PCH-3 | 25,00 |
| ME2N.F | 3,00 |
| ME3N.F | 3,00 |
| HP-3N.F | 3,00 |
| CCH-303 | 7,00 |
| CCH-501 | 7,00 |
| CCP-3F.F.F | 9,00 |
| CCP-5F.F.F | 9,00 |
| CCH-34 | 11,00 |
| CCH-35 | 11,00 |
| CH-33 | 3,00 |
| CH-35 | 3,00 |
| CH-43 | 3,00 |
| CH-45 | 3,00 |

und weist einen hohen Kontrast und niedrige Schaltzeiten auf.

Beispiel 2

Eine IPS-Anzeige enthält eine nematische Mischung mit

| | |
|---|---|
| Klärpunkt | 75 |
| $\Delta n$ | 0,0805 |
| $n_o$ | 1,4755 |
| $\Delta\varepsilon$ | 8,7 |

(fortgesetzt)

| | |
|---|---|
| $\varepsilon_{\perp}$ | 4,1 |
| Viskosität (20 °C) | 24 $mm^2\ s^{-1}$ |

bestehend aus

| | |
|---|---|
| PCH-3 | 25,00 |
| CCH-3 | 11,00 |
| CCH-34 | 10,00 |
| CCP-30CF2.F.F | 10,00 |
| CCP-50CF2.F.F | 10,00 |
| CCP-3F.F.F | 10,00 |
| CCP-5F.F.F | 10,00 |
| CH-33 | 4,00 |
| CH-35 | 3,00 |
| CCH-501 | 7,00 |

und weist einen hohen Kontrast und niedrige Schaltzeiten auf.

<u>Beispiel 3</u>

Eine IPS-Anzeige enthält eine nematische Mischung mit

| | |
|---|---|
| Klärpunkt | +75 °C |
| $\Delta n$ | 0,0813 |
| $n_o$ | 1,4760 |

bestehend aus

| | |
|---|---|
| PCH-3 | 25,00 |
| CCH-3 | 8,00 |
| CCH-34 | 10,00 |
| CCP-30CF2.F.F | 11,00 |
| CCP-50CF2.F.F | 10,00 |
| CCP-3F.F.F | 11,00 |
| CCP-5F.F.F | 11,00 |
| CH-33 | 4,00 |
| CH-35 | 3,00 |
| CCH-501 | 7,00 |

und weist einen hohen Kontrast und niedrige Schaltzeiten auf.

Beispiel 4

Eine IPS-Anzeige enthält eine nematische Mischung mit

Klärpunkt 81 °C
$\Delta n$ 0,0811
$n_o$ 1,4753

bestehend aus

| | |
|---|---|
| PCH-3 | 25,00 |
| CCH-303 | 9,00 |
| CCH-501 | 9,00 |
| CCP-30CF2.F.F | 11,00 |
| CCP-50CF2.F.F | 11,00 |
| CCP-3F.F.F | 11,00 |
| CCP-5F.F.F | 11,00 |
| CH-33 | 4,00 |
| CH-43 | 3,00CH-35 3,00 |
| CH-45 | 3,00 |

und weist einen hohen Kontrast und niedrige Schaltzeiten auf.

Beispiel 5

Eine IPS-Anzeige enthält eine nematische Mischung mit

Klärpunkt +77 °C
$\Delta n$ 0,0820
$n_o$ 1,4744

bestehend aus

| | |
|---|---|
| PCH-3 | 25,00 |
| CCH-303 | 9,00 |
| CCH-501 | 3,00 |
| CCP-30CF3 | 4,00 |
| CCP-30CF2.F.F1 | 11,00 |
| CCP-50CF2.F.F1 | 11,00 |
| CCP-3F.F.F | 11,00 |
| CCP-5F.F.F | 11,00 |
| CCH-34 | 10,00 |
| CH-35 | 5,00 |

und weist einen hohen Kontrast und niedrige Schaltzeiten auf.

Beispiel 6

Eine IPS-Anzeige enthält eine nematische Mischung mit

Klärpunkt +77 °C
$\Delta n$ 0,0832
$n_o$ 1,4758

bestehend aus

| | |
|---|---|
| PCH-3 | 23,00 |
| CCH-303 | 9,00 |
| CCP-30CF2.F.F | 11,00CCP-50CF2.F.F 11,00 |
| CCP-3F.F.F | 11,00 |
| CCP-5F.F.F | 11,00 |
| CCH-34 | 17,00 |
| BCH-3F.F.F | 4,00 |
| CCPC-33 | 3,00 |

und weist einen hohen Kontrast und niedrige Schaltzeiten auf.

Beispiel 7

Eine IPS-Anzeige enthält eine nematische Mischung mit

Klärpunkt +69 °C
$\Delta n$ 0,0811
$n_o$ 1,4766
$\Delta\varepsilon$ 13,2
$\varepsilon_\perp$ 4,2
S-N < -30 °C

bestehend aus

| | |
|---|---|
| ME2N.F | 4,00 |
| ME3N.F | 4,00 |
| ME5N.F | 10,00 |
| ME7N.F | 5,00 |
| CCH-2 | 12,00 |
| CCH-3 | 12,00 |
| CCH-4 | 12,00 |
| CCP-3F.F.F | 6,00 |
| CCP-5F.F.F | 6,00 |

(fortgesetzt)

| | |
|---|---|
| CH-33 | 5,00 |
| CH-35 | 5,00 |
| CH-43 | 5,00 |
| CCH-34 | 10,00 |
| CCH-303 | 4,00 |

und weist einen hohen Kontrast und niedrige Schaltzeiten auf.

Beispiele 8 bis 10

Die folgenden Beispiel betreffen IPS-Anzeigen enthaltend nematische Mischungen mit CFU-n-F

| Beispiel | 8 | 9 |
|---|---|---|
| Klärpunkt [°C] | +88 | +85 |
| Rot. visc. $\gamma_1$ [mPa · s] 20 °C | 136 | - |
| Spec. resistivity [Ω · cm] (20 °C) | 2.9E12 | - |
| Δn (589 nm, 20 °C) | +0.0769 | +0.0810 |
| Δε ( 1 kHz, 20 °C) | +7.8 | +9.1 |
| $V_{(10,0,20)}$ [V] | 1.29 | 1.05 |
| $V_{(90,0,20)}$ [V] | - | - |
| $K_1$ [$10^{-12}$ N] 20 °C | 11.6 | 9.1 |
| $K_3$ [$10^{-12}$ N] 20 °C | 17.2 | 18.2 |

| Composition [%]: | PCH-7F | 9.00 | PCH-7F | 7.00 |
|---|---|---|---|---|
| | CCP-20CF2.F.F | 8.00 | CCP-30CF2.F.F | 6.00 |
| | CCP-30CF2.F.F | 6.00 | CCP-50CF2.F.F | 5.00 |
| | CCP-50CF2.F.F | 5.00 | CCP-20CF3 | 8.00 |
| | CCP-20CF3 | 14.00 | CCP-30CF3 | 11.00 |
| | CCP-30CF3 | 12.00 | CCP-50CF3 | 10.00 |
| | CCP-50CF3 | 10.00 | CCP-2F.F.F | 15.00 |
| | CCP-2F.F.F | 16.00 | CCP-3F.F.F | 12.00 |
| | CCP-3F.F.F | 11.00 | CCP-5F.F.F | 10.00 |
| | CCP-5F.F.F | 9.00 | CFU-2-F | 6.00 |
| | | | CFU-3-F | 10.00 |

| Beispiel | 10 | |
|---|---|---|
| Klärpunkt [°C] | | +74 |
| Rot. visc. $\gamma_1$ [mPa · s] 20 °C | | 122 |
| Spec. resistivity [Ω · cm] (20 °C) | | 1.7E11 |
| Δn (589 nm, 20 °C) | | +0.0800 |
| Δε ( 1 kHz, 20 °C) | | +9.5 |
| $V_{(10,0,20)}$ [V] | | 0.95 |
| $V_{(90,0,20)}$ [V] | | - |
| $K_1$ [$10^{-12}$ N] 20 °C | | 7.7 |
| $K_3$ [$10^{-12}$ N] 20 °C | | 15.7 |
| Composition [%]: | PCH-7F | 8.00 |
| | CCP-30CF2.F.F | 7.00 |
| | CCP-20CF3 | 11.00 |
| | CCP-30CF3 | 13.00 |
| | CCP-2F.F.F | 15.00 |
| | CCP-3F.F.F | 14.00 |
| | CCP-5F.F.F | 9.00 |
| | CFU-2-F | 12.00 |
| | CFU-3-F | 11.00 |

Beispiele 11 bis 14

Die folgenden Beispiel betreffen IPS-Anzeigen enthaltend nematische Mischungen mit CCZU-n-F

| Beispiel | 11 | 12 |
|---|---|---|
| Klärpunkt [°C] | 78 | +68 |
| Rot. visc. $\gamma_1$ [mPa · s] 20 °C | 111 | 108 |
| Spec. resistivity [Ω · cm] (20 °C) | 2.8E11 | 3.0e11 |
| Δn (589 nm, 20 °C) | +0.0765 | +0.0758 |
| Δε ( 1 kHz, 20 °C) | +10.4 | +10.6 |
| $V_{(10,0,20)}$ [V] | 0.94 | 0.87 |
| $V_{(90,0,20)}$ [V] | - | - |
| $K_1$ [$10^{-12}$ N] 20 °C | 8.2 | 7.2 |
| $K_3$ [$10^{-12}$ N] 20 °C | 14.8 | 14.4 |

| | | | | |
|---|---|---|---|---|
| Composition [%]: | PCH-3 | 17.00 | PCH-7F | 9.00 |
| | CCP-2F.F.F | 16.00 | CCP-2F.F.F | 16.00 |
| | CCP-3F.F.F | 13.00 | CCP-3F.F.F | 13.00 |
| | CCP-5F.F.F | 8.00 | CCP-5F.F.F | 9.00 |
| | CCP-20CF3 | 4.00 | CCP-20CF3 | 16.00 |
| | CCZU-3-F | 16.00 | CCP-30CF3 | 8.00 |
| | CCZU-5-F | 13.00 | PDX-3 | 11.00 |
| | CCH-34 | 8.00 | CCZU-3-F | 10.00 |
| | CCH-35 | 5.00 | CCZU-5-F | 8.00 |

| Beispiel | 13 | | 14 | |
|---|---|---|---|---|
| Klärpunkt [°C] | | +76 | | +73 |
| Rot. visc. $\gamma_1$ [mPa · s] 20 °C | | 101 | | 105 |
| Spec. resistivity [Ω · cm] (20 °C) | | 4.4e11 | | 2.3E11 |
| Δn (589 nm, 20 °C) | | +0.0762 | | 0.0742 |
| Δε ( 1 kHz, 20 °C) | | +9.7 | | - |
| $V_{(10,0,20)}$ [V] | | 1.06 | | 0.93 |
| $V_{(90,0,20)}$ [V] | | - | | - |
| $K_1$ [$10^{-12}$ N] 20 °C | | 9.7 | | 8.2 |
| $K_3$ [$10^{-12}$ N] 20 °C | | 15.4 | | 14.5 |
| Composition [%]: | CCP-2F.F.F | 12.00 | CCP-2F.F.F | 12.00 |
| | CCP-3F.F.F | 11.00 | CCP-3F.F.F | 9.00 |
| | CCP-5F.F.F | 8.00 | CCP-5F.F.F | 8.00 |
| | CCP-20CF3 | 10.00 | CCP-20CF3 | 5.00 |
| | CCP-30CF3 | 10.00 | CCP-30CF3 | 8.00 |
| | CCP-50CF3 | 10.00 | CCP-50CF3 | 5.00 |
| | PDX-3 | 11.00 | PDX-3 | 11.00 |
| | CCH-35 | 8.00 | CCH-35 | 8.00 |
| | PCH-7F | 7.00 | PCH-7F | 7.00 |
| | CCZU-2-F | 7.00 | CCZU-2-F | 7.00 |
| | CCZU-3-F | 6.00 | CCZU-3-F | 13.00 |
| | | | CCZU-5-F | 6.00 |

Beispiele 15 bis 21

Die folgenden Beispiel betreffen IPS-Anzeigen enthaltend nematische Mischungen mit CDU-n-F oder CGU-n-F

| Beispiel | 15 | | 16 | |
|---|---|---|---|---|
| Klärpunkt [°C] | | +65 | | +80 |
| Rot. visc. $\gamma_1$ [mPa · s] 20 °C | | 104 | | 136 |
| Spec. resistivity [Ω · cm] (20 °C) | | 3.3e11 | | 4.2E12 |
| Δn (589 nm, 20 °C) | | +0.0703 | | +0.0852 |
| Δε ( 1 kHz, 20 °C) | | +10.1 | | +10.0 |
| $V_{(10,0,20)}$ [V] | | 1.00 | | 1.05 |
| $K_1$ [$10^{-12}$ N] 20 °C | | 9.1 | | 9.9 |
| $K_3$ [$10^{-12}$ N] 20 °C | | 13.1 | | 13.6 |
| Composition [%]: | PCH-7F | 9.00 | CCP-20CF2.F.F | 9.00 |
| | CCP-20CF3 | 16.00 | CCP-20CF3 | 13.00 |
| | CCP-30CF3 | 12.00 | CCP-30CF3 | 10.00 |
| | CCP-2F.F.F | 16.00 | CCP-50CF3 | 8.00 |
| | CCP-3F.F.F | 11.00 | CCP-2F.F.F | 16.00 |
| | CCP-5F.F.F | 9.00 | CCP-3F.F.F | 14.00 |
| | CDU-2-F | 12.00 | CCP-5F.F.F | 12.00 |
| | CDU-3-F | 9.00 | CGU-2-F | 12.00 |
| | CDU-5-F | 6.00 | CGU-3-F | 6.00 |

| Beispiel | 17 | | 18 | |
|---|---|---|---|---|
| Klärpunkt [°C] | | +64 | | 71 |
| Rot. visc. $\gamma_1$ [mPa · s] 20 °C | | 115 | | 95 |
| Spec. resistivity [Ω · cm] (20 °C) | | 1.3e12 | | 9.0E11 |
| Δn (589 nm, 20 °C) | | +0.0744 | | +0.0758 |
| Δε ( 1 kHz, 20 °C) | | +10.9 | | +10.4 |
| $V_{(10,0,20)}$ [V] | | 0.90 | | 1.04 |
| $K_1$ [$10^{-12}$ N] 20 °C | | 7.8 | | 10.1 |
| $K_3$ [$10^{-12}$ N] 20 °C | | 10.9 | | 13.7 |
| Composition [%]: | CCP-20CF3 | 16.00 | PCH-3 | 11.00 |
| | CCP-30CF3 | 10.00 | CCP-2F.F.F | 16.00 |
| | CCP-2F.F.F | 16.00 | CCP-3F.F.F | 12.00 |
| | CCP-3F.F.F | 14.00 | CCP-5F.F.F | 5.00 |
| | CCP-5F.F.F | 12.00 | CCP-20CF3 | 16.00 |
| | CGU-2-F | 12.00 | CCP-30CF3 | 5.00 |
| | CGU-3-F | 4.00 | CDU-3-F | 22.00 |
| | CDU-2-F | 12.00 | CCH-34 | 8.00 |
| | CDU-3-F | 4.00 | CCH-35 | 5.00 |

| Beispiel | 19 | | 20 | |
|---|---|---|---|---|
| Klärpunkt [°C] | | +78 | | +65 |
| Rot. visc. $\gamma_1$ [mPa · s] 20 °C | | 86 | | 104 |
| Spec. resistivity [Ω · cm] (20 °C) | | 3.8e12 | | 3.3e11 |
| Δn (589 nm, 20 °C) | | +0.0663 | | +0.0703 |
| Δε ( 1 kHz, 20 °C) | | +8.0 | | +10.1 |
| $V_{(10,0,20)}$ [V] | | 1.22 | | 1.00 |
| $K_1$ [$10^{-12}$ N] 20 °C | | 10.7 | | 9.1 |
| $K_3$ [$10^{-12}$ N] 20 °C | | 13.7 | | 13.1 |
| Composition [%]: | CCP-2F.F.F | 16.00 | PCH-7F | 9.00 |
| | CCP-3F.F.F | 12.00 | CCP-20CF3 | 16.00 |
| | CCP-5F.F.F | 6.00 | CCP-30CF3 | 12.00 |
| | CCP-20CF3 | 16.00 | CCP-2F.F.F | 16.00 |
| | CCP-30CF3 | 10.00 | CCP-3F.F.F | 11.00 |
| | CDU-2-F | 10.00 | CCP-5F.F.F | 9.00 |
| | CDU-3-F | 8.00 | CDU-2-F | 12.00 |
| | CDU-5-F | .00 | CDU-3-F | 9.00 |
| | CCH-34 | 10.00 | CDU-5-F | 6.00 |
| | CCH-35 | 8.00 | | |
| | PCH-7F | 4.00 | | |

| Beispiel | 21 | |
|---|---|---|
| Klärpunkt [°C] | | +60 |
| Rot. visc. $\gamma_1$ [mPa · s] 20 °C | | 109 |
| Spec. resistivity [Ω · cm] (20 °C) | | - |
| Δn (589 nm, 20 °C) | | +0.0756 |
| Δε ( 1 kHz, 20 °C) | | +13.7 |
| $V_{(10,0,20)}$ [V] | | 0.70 |
| $K_1$ [$10^{-12}$ N] 20 °C | | 6.0 |
| $K_3$ [$10^{-12}$ N] 20 °C | | 14.5 |
| Composition [%]: | CCP-2F.F.F | 16.00 |
| | CCP-3F.F.F | 14.00 |
| | CCP-5F.F.F | 11.00 |
| | CCP-20CF3 | 17.00 |
| | CCP-30CF3 | 14.00 |
| | PDX-2N.F | 3.00 |
| | PDX-3N.F | 6.00 |
| | PDX-5N.F | 11.00 |
| | CDU-3-F | 8.00 |

Beispiel 22

Eine IPS-Anzeige enthält eine nematische Mischung mit

| | |
|---|---|
| Klärpunkt | +68 °C |
| Δn | 0,0789 |

| | |
|---|---|
| $n_o$ | 1,4725 |
| $\Delta\varepsilon$ | 12,7 |
| $\varepsilon_\perp$ | 5,1 |
| Viskosität (20 °C) | 18 $mm^2\ s^{-1}$ |
| $K_1$ [$10^{-12}$ N] (20 °C) | 7,4 |
| $K_3$ [$10^{-12}$ N] (20 °C) | 15,6 |

bestehend aus

| | |
|---|---|
| PCH-3 | 6,00 |
| CCP-2OCF$_2$.F.F | 12,00 |
| CCP-2F.F.F | 17,00 |
| CCP-3F.F.F | 14,00 |
| CCP-5F.F.F | 13,00 |
| CCP-2OCF$_3$ | 15,00 |
| CCP-3OCF$_3$ | 13,00 |
| PDX-3N.F.F | 5,00 |
| PDX-5N.F.F | 5,00 |

und weist einen hohen Kontrast und niedrige Schaltzeiten auf.

<u>Beispiel 23</u>

Eine IPS-Anzeige enthält eine nematische Mischung mit

| | |
|---|---|
| Klärpunkt | 75 |
| $\Delta n$ | 0,0800 |
| $n_o$ | 1,4735 |
| $\Delta\varepsilon$ | 11,7 |
| $\varepsilon_\perp$ | 4,8 |
| Viskosität (20 °C) | 24 $mm^2\ s^{-1}$ |

bestehend aus

| | |
|---|---|
| PCH-3 | 6,00 |
| CCP-2OCF$_2$.F.F | 12,00 |
| CCP-2F.F.F | 17,00 |
| CCP-3F.F.F | 14,00 |
| CCP-5F.F.F | 13,00 |
| CCP-2OCF$_3$ | 15,00 |
| CCP-3OCF$_3$ | 13,00 |
| PDX-3N.F | 5,00 |
| PDX-5N.F | 5,00 |

und weist einen hohen Kontrast und niedrige Schaltzeiten auf.

Beispiel 24

Eine IPS-Anzeige enthält eine nematische Mischung bestehend aus

| | |
|---|---|
| PCH-3 | 10,00 |
| PDX-3N.F | 14,00 |
| PDX-3N.F.F | 9,00 |
| CCP-3OCF2.F.F | 11,00 |
| CCP-5OCF2.F.F | 10,00 |
| CCP-3F.F.F | 11,00 |
| CCP-5F.F.F | 11,00 |
| CH-33 | 4,00 |
| CH-35 | 3,00 |
| CCH-501 | 7,00 |

und weist einen hohen Kontrast und niedrige Schaltzeiten auf.

Beispiel 25

Eine IPS-Anzeige enthält eine nematische Mischung mit

| | | | |
|---|---|---|---|
| PCH-3 | 7,00 | Klärpunkt | +60 °C |
| PCH-7F | 2,00 | $\Delta n$ | 0,0798 |
| CCP-2F.F.F | 16,00 | $\Delta\varepsilon$ | +12,6 |
| CCP-3F.F.F | 10,00 | $\varepsilon_\perp$ | 5,6 |
| CCP-5F.F.F | 9,00 | $E_l$ | 18,2 |
| CCP-2OC$F_3$ | 16,00 | Rotationsviskosität (20 °C) | 97 mPa • S |
| CCP-3OC$F_3$ | 15,00 | $V_{10}$ | 0.77 V |
| CCP-4OC$F_3$ | 5,00 | Spez. Widerstand | 4,9 • $10^{10}$ Ω • cm |
| PDX-2N.F | 5,00 | $K_1$ | 6,6 • $10^{-12}$ N |
| PDX-3N.F | 5,00 | $K_3$ | 14,7 • $10^{-12}$ N |
| PDX-5N.F | 4,00 | | |
| PDX-3 | 6,00 | | |

und weist einen hohen Kontrast und niedrige Schaltzeiten auf.

Beispiel 26

Eine IPS-Anzeige enthält eine nematische Mischung mit

| | | | |
|---|---|---|---|
| PCH-3 | 11,00 | Klärpunkt | +83 °C |
| CCP-2F.F.F | 16,00 | Δn | 0,0809 |
| CCP-3F.F.F | 10,00 | Δε | +10,3 |
| CCP-5F.F.F | 7,00 | $\varepsilon_{\perp}$ | +4,0 |
| CCP-2OC$F_3$ | 16,00 | Rotationsviskosität (20 °C) | 105 mPa • S |
| CCP-3OC$F_3$ | 15,00 | $V_{10}$ | 1,05 V |
| CCP-5OC$F_3$ | 11,00 | Spez. Widerstand | 3,4 • $10^{11}$ Ω • cm |
| PDX-2N.F | 5,00 | | |
| CCH-34 | 6,00 | | |

und weist einen hohen Kontrast und niedrige Schaltzeiten auf.

Beispiel 27

Eine IPS-Anzeige enthält eine nematische Mischung mit

| | | | |
|---|---|---|---|
| PCH-3 | 6,00 | Klärpunkt | +68 °C |
| CCP-2OCF2.F.F | 12,00 | Δn | 0,0789 |
| CCP-2F.F.F | 17,0 | Δε | 12,7 |
| CCP-3F.F.F | 14,00 | $\varepsilon_{\perp}$ | 5,1 |
| CCP-2OC$F_3$ | 15,00 | $V_{10}$ | 0,81 V |
| CCP-3OC$F_3$ | 13,00 | $K_1$ | 7,4 • $10^{-12}$ N |
| DU-3-N | 5,00 | $K_3$ | 15,6 ± $10^{-12}$ N |
| CU-5-N | 5,00 | | |

und weist einen hohen Kontrast und niedrige Schaltzeiten auf.

Beispiel 28

Eine IPS-Anzeige enthält eine nematische Mischung mit

| | | | |
|---|---|---|---|
| CCP-2F.F.F | 16,00 | Klärpunkt | +60 °C |
| CCP-3F.F.F | 14,00 | Δn | 0,0756 |
| CCP-5F.F.F | 11,00 | Δε | +13,7 |
| CCP-2OC$F_3$ | 17,00 | $\varepsilon_{\perp}$ | +6,1 |
| CCP-3OC$F_3$ | 14,00 | Rotationsviskosität (20 °C) | 109 mPa • s |

(fortgesetzt)

| | | | |
|---|---|---|---|
| PDX-2N.F | 3,00 | $V_{10}$ | 0,70 V |
| PDX-3N.F | 6,00 | $K_1$ | $6{,}0 \cdot 10^{-12}$ N |
| PDX-5N.F | 11,00 | $K_3$ | $14{,}5 \cdot 10^{-12}$ N |
| CDU-3-F | 8,00 | | |

und weist einen hohen Kontrast und niedrige Schaltzeiten auf.

Beispiel 29

Eine IPS-Anzeige enthält eine nematische Mischung mit

| | | | |
|---|---|---|---|
| PCH-3 | 7,00 | Klärpunkt | +71 °C |
| CCP-2F.F.F | 16,00 | Δn | 0,0777 |
| CCP-3F.F.F | 7,00 | Δε | +10,6 |
| CCP-5F.F.F | 9,00 | $\varepsilon_\perp$ | 4,7 |
| CCP-2OCF$_3$ | 16,00 | Rotationsviskosität (20 °C) | 88 mPa • s |
| CCP-3OCF$_3$ | 15,00 | $V_{10}$ | 0,94 V |
| CCP-5OCF$_3$ | 4,00 | $K_1$ | $8{,}5 \cdot 10^{-12}$ N |
| PDX-2N.F | 5,00 | $K_3$ | $15{,}2 \cdot 10^{-12}$ N |
| PDX-3N.F | 5,00 | | |
| PDX-5N.F | 3,00 | | |
| CCH-34 | 8,00 | | |
| CCH-35 | 5,00 | | |

und weist einen hohen Kontrast und niedrige Schaltzeiten auf.

Beispiel 30

Eine IPS-Anzeige enthält eine nematiche Mischung mit

| | | | |
|---|---|---|---|
| CCP-2F.F.F | 16,00 | Klärpunkt | +76 °C |
| CCP-3F.F.F | 13,00 | Δε | +9,0 |
| CCP-5F.F.F | 9,00 | $\varepsilon_\perp$ | +3,9 |
| CCP-2OCF$_3$ | 16,00 | Δn | 0,0768 |
| CCP-3OCF$_3$ | 15,00 | $V_{10}$ | 1,16 V |
| CCP-5OCF$_3$ | 5,00 | Rotationsviskosität (20 °C) | 93 mPa • s |
| PDX-3 | 11,00 | Spez. Widerstand | $2{,}3 \cdot 10^{12}\ \Omega \cdot$ cm |
| CCH-34 | 10,00 | | |
| PCH-7F | 5,00 | | |

Beispiel 31

Eine IPS-Anzeige enthält eine nematische Mischung mit

| | |
|---|---|
| Klärpunkt | +68 °C |
| $\Delta n$ | 0,0776 |
| $n_o$ | 1,4725 |
| $\Delta\varepsilon$ | +10,6 |
| $\varepsilon_\perp$ | 5,1 |
| Rotationsviskosität (20 °C) | 82 mPa.s |
| $K_1$ [$10^{-12}$ N] (20 °C) | 9,8 |
| $K_3$ [$10^{-12}$ N] (20 °C) | 12,1 |
| Spez. Widerstand | $6,7 \cdot 10^{11}\ \Omega$ cm |

bestehend aus

| | |
|---|---|
| PCH-3 | 8,00 |
| CCP-2F.F.F | 13,00 |
| CCP-3F.F.F | 7,00 |
| CCP-5F.F.F | 9,00 |
| CCP-20CF$_3$ | 16,00 |
| CCP-30CF$_3$ | 15,00 |
| CCP-50CF$_3$ | 5,00 |
| PCH-2N.F.F | 6,00 |
| PCH-3N.F.F | 8,00 |
| CCH-34 | 8,00 |
| CCH-35 | 5,00 |

und weist einen hohen Kontrast und niedrige Schaltzeiten auf.

Beispiel 32

Eine IPS-Anzeige enthält eine nematische Mischung mit

| | |
|---|---|
| Klärpunkt | +76 °C |
| $\Delta n$ | 0,0776 |
| $n_o$ | 1,4725 |
| $\Delta\varepsilon$ | +10,8 |
| $\varepsilon_\perp$ | 4,4 |
| $K_1$ [$10^{-12}$ N] (20 °C) | 8,1 |
| $K_3$ [$10^{-12}$ N] (20 °C) | 12,9 |

bestehend aus

| | |
|---|---|
| PCH-3 | 5,00 |
| CCP-2F.F.F | 13,00 |
| CCP-3F.F.F | 9,00 |

(fortgesetzt)

| | |
|---|---|
| CCP-5F.F.F | 9,00 |
| CCP-20CF$_3$ | 15,00 |
| CCP-30CF$_3$ | 14,00 |
| CCP-50CF$_3$ | 5,00 |
| D-3N.F.F | 12,00 |
| D-5N.F | 5,00 |
| CCH-34 | 8,00 |
| CCH-35 | 5,00 |

und weist einen hohen Kontrast und niedrige Schaltzeiten auf.

Die IPS-Anzeigen der Beispiele 1 bis 32 zeichnen sich durch eine geringe Ansteuerspannung aus und führen in Zellen nach Embodient 1 der EP 0 58 568 zu guten "Voltage Holding Ratio" Werten.

Vergleichsbeispiel

Eine IPS-Anzeige enthält eine nematische Mischung mit

| | |
|---|---|
| Klärpunkt | 64 °C |
| $\Delta n$ | 0,0813 |
| $\Delta\varepsilon$ | +12,0 |

bestehend aus

| | |
|---|---|
| ME2N.F | 4,00 |
| ME3N.F | 4,00 |
| ME5N.F | 10,00 |
| ME7N.F | 6,00 |
| CCH-2 | 12,00 |
| CCH-3 | 12,00 |
| CCH-4 | 12,00 |
| CCP-30CF3 | 6,00 |
| CCP-50CF3 | 6,00 |
| CH-33 | 3,00 |
| CH-35 | 3,00 |
| CCH-34 | 10,00 |
| CCH-35 | 4,00 |
| CCH-303 | 4,00 |
| CCH-501 | 4,00 |

und weist einen geringeren Kontrast und eine höhere Schaltzeit als die Anzeigen der Beispiele 1 bis 32 auf.

**Patentansprüche**

**1.** Elektrooptische Flüssigkristallanzeige

- mit einer Umorientierungsschicht zur Umorientierung der Flüssigkristalle, deren Feld eine signifikante Komponente parallel zur Flüssigkristallschicht aufweist,

- enthaltend ein flüssigkristallines Medium mit positiver dielektrischer Anisotropie, dadurch gekennzeichnet, daß das Medium mindestens eine mesogene Verbindung der Formel I enthält;

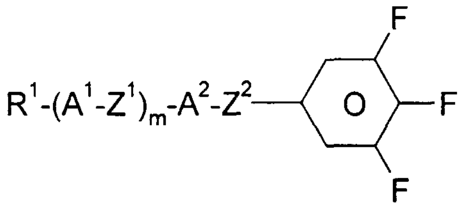

(I)

worin

| | |
|---|---|
| $R^1$ | H, einen unsubstituierten, einen einfach durch CN oder $CF_3$ oder einen mindestens einfach durch Halogen substituierten Alkyl- oder Alkenylrest mit 1 bis 15 C-Atomen, wobei in diesen Resten auch eine oder mehrere $CH_2$-Gruppen jeweils unabhängig voneinander durch -O-, -S-, 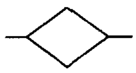 -CO-, -CO-O-, -O-CO- oder -O-CO-O- so ersetzt sein können, daß O-Atome nicht direkt miteinander verknüpft sind, |
| $A^1$ und $A^2$ | jeweils unabhängig voneinander einen<br>(a) 1,4-Cyclohexenylen oder trans-1,4-Cyclohexylenrest, worin auch eine oder mehrere nicht benachbarte $CH_2$-Gruppen durch -O- und/oder -S-ersetzt sein können,<br>(b) 1,4-Phenylenrest, worin auch eine oder zwei CH-Gruppen durch N ersetzt sein können,<br>(c) Rest aus der Gruppe 1,4-Bicyclo(2,2,2)-octylen, Piperidin-1,4-diyl, Naphthalin-2,6-diyl, Decahydronaphthalin-2,6-diyl und 1,2,3,4-Tetrahydronaphthalin-2,6-diyl,<br>wobei die Reste (a) und (b) durch ein oder zwei Fluor substituiert sein können, |
| $Z^1$ und $Z^2$ | jeweils unabhängig voneinander -CO-O-, -O-CO-, $-CH_2O-$, $-OCH_2-$, $-CH_2CH_2-$, -CH=CH-, -C≡C- oder eine Einfachbindung, einer der Reste $Z^1$ und $Z^2$ auch $-(CH_2)_4-$ oder $-CH=CH-CH_2CH_2-$, und |
| m | 0, 1 oder 2 |

bedeutet.

**2.** Flüssigkristallanzeige nach Anspruch 1, dadurch gekennzeichnet, daß das Medium mindestens eine Verbindung ausgesucht aus der Gruppe der Formeln CDU-n-F und CFU-n-F

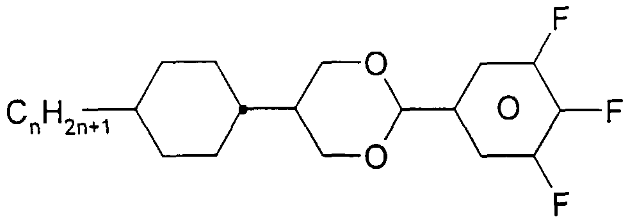

CDU-n-F

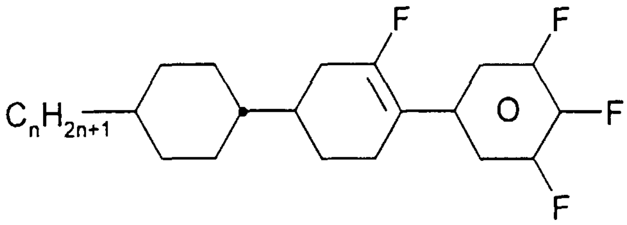

CFU-n-F

enthält.

3. Flüssigkristallanzeige nach einem der Ansprüche 1 und 2, dadurch gekennzeichnet, daß das Medium mindestens eine Verbindung der Formeln CDU-n-F

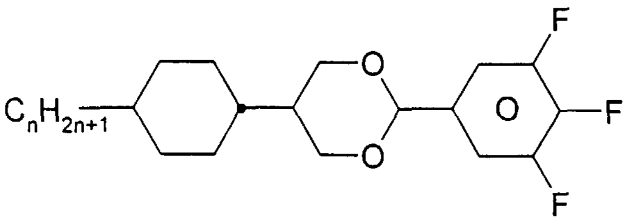

CDU-n-F

enthält.

4. Flüssigkristallanzeige nach einem der Ansprüche 1 und 2, dadurch gekennzeichnet, daß das Medium mindestens eine Verbindung der Formeln CDU-n-F

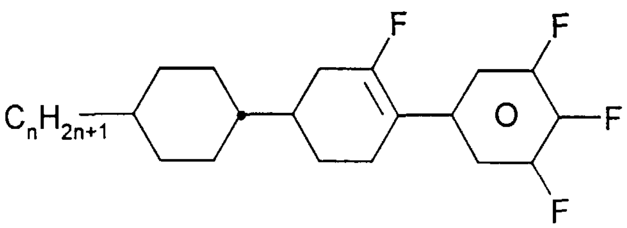

CFU-n-F

enthält.

5. Anzeige nach einem der Ansprüche 1 bis 4, dadurch gekennzeichnet, daß die Bildelemente mittels Aktivmatrix angesteuert werden.

6. Flüssigkristallines Medium mit positiver dielektrischer Anisotropie, welches eine Zusammensetzung gemäß der

Ansprüche 1 bis 5 aufweist.